# EUROPÄISCHE PATENTSCHRIFT

(11) **EP 0 912 771 B1**
(45) Veröffentlichungstag und Bekanntmachung des Hinweises auf die Patenterteilung: **05.04.2000**
(21) Anmeldenummer: 97923081.0
(22) Anmeldetag: 15.05.1997
(51) Int. Cl.: C22B 34/22, C01B 3/36, C01G 31/02, C10J 3/84, B01D 47/02, C10M 175/00

(54) **VERFAHREN ZUR ERZEUGUNG EINES METALLURGISCHEN ROHSTOFFS AUS SCHWERMETALLHALTIGEM ÖL**
PROCESS FOR PRODUCING A METALLURGICAL RAW MATERIAL FROM OIL CONTAINING HEAVY METALS
PROCEDE POUR PRODUIRE UNE MATIERE PREMIERE METALLURGIQUE A PARTIR D'HUILE CONTENANT DES METAUX LOURDS

(30) Priorität: 01.06.1996 DE 19622153
(43) Veröffentlichungstag der Anmeldung: 06.05.1999
(73) Patentinhaber: Krupp Uhde GmbH, 44141 Dortmund (DE)
(72) Erfinder: BUXEL, Michael, D-45731 Waltrop (DE); KELLER, Heinz, Jochen, D-44265 Dortmund (DE)
(74) Vertreter: Patentanwälte Meinke, Dabringhaus und Partner
(86) Internationale Anmeldenummer: EP9702484
(87) Internationale Veröffentlichungsnummer: WO9746723

(56) Entgegenhaltungen:
- EP-A- 0 515 950
- EP-A- 0 686 598
- DE-A- 4 309 825
- GB-A- 1 178 267
- GB-A- 2 026 458
- US-A- 3 807 987

## Beschreibung

Die Erfindung bezieht sich auf ein Verfahren, mit dem aus einem Schwermetalle enthaltenden Öl neben Synthesegas ein metallurgischer Rohstoff erzeugt wird.

Bekanntlich können Öle mit Schwermetallen verunreinigt sein. Dies gilt grundsätzlich für alle Erdöle, deren Qualität mit abnehmenden Ressourcen zudem immer schlechter wird, besonders für solche aus Venezuela und Rußland, aber auch für Raffinerierückstände, Bitumen, Altöle und Pyrolyseöle. Besonders häufig treten als Verunreinigungen die Schwermetalle Vanadium und Nickel auf. Bei der energetischen oder stofflichen Umsetzung solcher Öle führt der Schwermetallgehalt zu Problemen: Zum einen entstehen bei einer Verbrennung oder einer partiellen Oxidation Schwermetallverbindungen, die äußerst korrosive Wirkungen entfalten und bei den herrschenden Arbeitstemperaturen schmelzflüssig oder teigig werden können, dadurch zum Anbacken neigen und in der Folge zu Betriebsstörungen führen. Zum anderen dürfen diese Schwermetallverbindungen nur in sehr geringen Mengen gasförmig oder flüssig emittiert werden. Eine Deponierung in fester Form ist teuer und unterliegt strengen gesetzlichen Bestimmungen. Aus diesen Gründen wird von Anlagenbetreibern vorzugsweise auf Öle mit geringen Schwermetallgehalten zurückgegriffen, was wertmindernd für die schwermetallhaltigen Öle ist.

Die vorliegende Erfindung löst die beschriebenen Probleme durch die im Anspruch 1 angegebenen Merkmale, nämlich
a) der schwermetallhaltige Ruß wird abgetrennt und verbrannt, wobei die Schwermetalle dabei als Asche anfal len,
b) der bei der partiellen Oxidation entstehende Ruß, der die Schwermetalle in angelagerten chemischen Verbindungen enthält, wird mittels einer wäßrigen Waschlösung aus dem entstandenen Synthesegas ausgewaschen,
c) die Waschlösung wird in einer Kammerfilterpresse in der Weise filtriert, daß das zuerst erhaltene Filtrat aufgefangen und nochmals filtriert wird,
d) der so erhaltene Filterkuchen, der die Schwermetalle nahezu vollständig enthält, wird entweder in einem Sprühtrockner, einem Stromtrockner mit Mahlwerk oder einem Mahltrockner mit erhitztem Inertgas auf eine Rest feuchte von < 10 % getrocknet,
e) der so konditionierte, staubförmige Ruß wird mit einer maximalen Korngröße der Rußpartikel von ≤ 140 µm in einem Staubbrenner bei einer Temperatur von 900 bis 1000°C und einem Sauerstoffgehalt von über 1 % unter Einhaltung einer Reaktionszeit von höchstens 3 Sekunden, vorzugsweise 1 Sekunde, verbrannt,
f) das gebildete Rauchgas wird sofort im Anschluß an die Verbrennung durch Zugabe von Luft oder Inertgas oder Wasser oder entstaubtem, abgekühlten Rauchgas auf 450 bis 650°C, vorzugsweise 600°C, abgekühlt,
g) die bei der Verbrennung freigesetzte Wärme wird für die Aufheizung des im Trocknungsprozeß verwendeten Inertgases eingesetzt.

Die Umsetzung des schwermetallhaltigen Öls erfolgt in einer Anlage zur partiellen Oxidation, nachstehend als ölvergasung bezeichnet. Üblicherweise findet in einer Anlage zur Vergasung von flüssigen oder festen, kohlenstoffhaltigen Brennstoffen nur eine unvollständige Umsetzung der Kohlenstoffverbindungen statt. Das liegt daran, daß innerhalb der Flamme, in der die Reaktion hauptsächlich stattfindet, Sauerstoffmangel herrscht. Dieser Sauerstoffmangel hat zwei Ursachen: Zum einen benötigt die partielle Oxidation wesentlich weniger Sauerstoff als eine Verbrennung, daher wird Sauerstoff vergleichsweise sparsam zugegeben. Zum anderen ist eine annähernd perfekte Vermischung von Sauerstoff mit Ölnebel sehr schwer technisch zu verwirklichen, so daß innerhalb der Reaktionszone Bereiche mit größerem Sauerstoffmangel neben gut mit Sauerstoff versorgten koexistieren. Je schlechter die Vermischung, desto mehr Ruß bildet sich.

Eine übliche Technik, den Ruß zu entsorgen, besteht darin, ihn in den Vergasungsreaktor zurückzuführen. Bei dieser Rückführung wird ein großer Teil des rückgeführten Rußes zu Synthesegas umgesetzt. Eine direkte Rückführung von schwermetallhaltigem Ruß aus einer Ölvergasung in den Vergasungsreaktor würde im Vergasungsreaktor und in den folgenden Apparaten zu einer Anreicherung der Schwermetalle führen und in der Folge zu den bereits erwähnten betrieblichen Problemen. Deswegen müssen die Schwermetalle in aufwendiger Weise vom Ruß abgetrennt werden, bevor eine Rückführung des Rußes in den Vergasungsreaktor technisch sinnvoll ist. Dies geschieht üblicherweise in einer Extraktionsanlage, in der Naphtha als Extraktionsmittel dient. Da eine solche Trennung zu vertretbaren Kosten nie perfekt gelingt, ist mit einer Schwermetallanreicherung im Vergasungsreaktor und nachgeschalteten Einrichtungen immer zu rechnen.

Bei einem anderen Verfahren, beschrieben in der Offenlegungsschrift DE-43 09 825, wird der Filterkuchen mit Säure behandelt. Die Säure löst dabei die Schwermetalle aus dem Ruß.

Ein weiteres Merkmal der vorliegenden Erfindung besteht darin, daß der entstehende Ruß, der die Schwermetalle in angelagerten chemischen Verbindungen enthält, mittels einer wäßrigen Waschlösung aus dem in der partiellen Oxidation entstandenen Synthesegas ausgewaschen wird. Dabei wird nach einem Merkmal der vorliegenden Erfindung die Waschlösung in einer Kammerfilterpresse in der Weise filtriert, daß das zuerst erhaltene Filtrat aufgefangen und nochmals filtriert wird.

Aus der GB-A-1 178 267 ist eine Technologie des Auswaschens von Ruß für sich gesehen bekannt, wobei die Rußwassersuspension einer weiteren Behandlung unterzogen wird, um dem Wasserdampf den Ruß zu entziehen.

In der vorliegenden Erfindung entfällt die aufwendige Trennung der Schwermetalle vom Ruß, was als Vorteil erhebliche Einsparungen beim apparativen Aufwand und eine Steigerung der betrieblichen Zuverlässigkeit bringt. Dabei ist es erwünscht, Ruß mit einem möglichst hohen Gehalt an Schwermetallen zu erhalten, da die Schwermetalle den Verbrennungsvorgang unterstützen und nach der Rußverbrennung auf einem Filter abgeschieden werden. Es werden nur Vorrichtungen vorgesehen, die betriebliche Probleme nicht erwarten lassen. Auf ein Trennungsverfahren für Ruß und Schwermetalle kann daher verzichtet werden, die separate Verbrennung ersetzt das Trennverfahren.

Nachteilig erscheint zunächst, daß die im Ruß enthaltene Energie nicht in Form von Synthesegas erhalten wird. Führte man den Ruß zurück in den Vergaser, würde der Kohlenstoff in Synthesegas umgesetzt. Überraschenderweise gelingt die Umsetzung von Öl in Synthesegas in einem Drei- oder Mehrstrombrenner so gut, daß nur noch sehr wenig Ruß entsteht. Dieser enthält entsprechend viel Schwermetall, was einer späteren Metallrückgewinnung mittels Verbrennung entgegenkommt und einen weiteren Vorteil darstellt. Wegen der sehr hohen Ausbeute eines Drei- oder Mehrstrombrenners ist der Verlust an Synthesegasausbeute im Vergleich zur herkömmlichen Technik mit vollständiger Rußrückführung äußerst gering, so daß eine Rußrückführung auch aus energetischer Sicht nicht mehr lohnen würde.

Daher sind spezielle Ausgestaltungen der vorliegenden Erfindung geschaffen worden, bei denen schwermetallhaltiges öl einer partiellen Oxidation zugeführt wird, die vorzugsweise mit einem Drei- oder Mehrstrombrenner ausgestattet ist, welcher einen hohen Kohlenstoffumsatz zu Synthesegas erreicht und entsprechend wenig Ruß erzeugt.

Dagegen ist es möglich, dem Synthesegas mehr Nutzwärme zu entziehen, da keine Anreicherung mehr von Schwermetallen durch Rückführung von Ruß auftritt, und es dadurch möglich wird, Wärmetauscher für die Abhitzenutzung bei höherer Temperatur einzusetzen, ohne sie der Gefahr von Verbackungen und Korrosionsangriff auszusetzen. Der Gesamtwirkungsgrad eines kombinierten Gas-Dampfturbinenkraftwerks mit integrierter Vergasung zur Gewinnung von elektrischer Energie aus Synthesegas kann damit beispielsweise um bis zu 5 Prozentpunkte verbessert werden, was ein weiterer Vorteil der Erfindung ist.

Der Ruß, der im wesentlichen aus dem nicht umgesetzten Kohlenstoff besteht, wird staubförmig aus dem Vergasungsreaktor ausgetragen und enthält Schwermetallverbindungen in fester Form. In einer anschließenden Wasserwäsche, der eine Abhitzeverwertung vorangeschaltet sein kann, wird der Ruß vom Prozeßgas abgetrennt. Er liegt danach als etwa 1 %-ige, wäßrige Suspension vor, im folgenden als "Rußwasser" bezeichnet. Die Schwermetallverbindungen liegen im Rußwasser sowohl in gelöster als auch in fest an die Rußpartikel gebundener Form vor.

Nach einer Entspannung des Rußwassers und ggf. einer Dampfstrippung wird der schwermetallhaltige Ruß aus dem Rußwasser mit einer Filterpresse abfiltriert. Der Filterkuchen besitzt einen Rußanteil von 15 - 25 %, der Rest ist Wasser. Beim herkömmlichen Stand der Technik muß an dieser Stelle die Extraktion der Schwermetalle aus dem Ruß erfolgen, die Schwermetalle gelangen dabei in eine Abwasserlösung, die aufwendig nachbehandelt werden muß, um sie entsorgen zu dürfen.

Beim Filtern in der Kammerfilterpresse zeigt sich außerdem, daß zu Beginn des Filtrationsvorgangs ein Filtrat anfällt, das noch einen merklichen Schwermetallanteil enthält, wohingegen die Schwermetallbelastung des Filtrats nach Ausbildung eines genügend dicken Filterkuchens stark abnimmt und auf sehr kleine Konzentrationen zurückgeht. Nur der Teil des Filtrats, der durch eine ausreichend dicke Filterkuchenschicht gepreßt wird, genügt den Bestimmungen für das Ableiten als Abwasser. Dadurch, daß beim Filtrationsvorgang durch eine Mindestdicke des Filterkuchens Schwermetalle darin zurückgehalten werden, ist auch der Filterkuchen nicht, wie sonst gewünscht, schwermetallarm. Daher müssen nach dem Stand der Technik entweder zusätzliche Maßnahmen zur Schwermetallentfernung aus dem Filtrat und/oder aus dem Filterkuchen getroffen werden.

In der vorliegenden Erfindung ist eine Entfernung der Schwermetalle aus dem Filterkuchen nicht erwünscht, da der Filterkuchen zwecks Rückgewinnung der Metalle weiterverarbeitet werden soll. In Anlehnung an die bereits erwähnte Offenlegungsschrift DE-43 09 825 wird daher das Filtrat von Beginn der Filtrierung an in einem Behälter solange aufgefangen, bis die Schwermetallkonzentration des momentan ablaufenden Filtrats unterhalb der gesetzlichen Grenzwerte für Abwasser liegt. Aus dem Behälter wird das schwermetallhaltige, filtrierte Wasser dann nochmals nach und nach in derselben Kammerfilterpresse mitfiltriert, wobei der bereits gebildete Filterkuchen als schwermetalladsorbierende Schicht genutzt wird. Das jetzt ablaufende Filtrat wird nicht mehr in den Behälter geleitet. Es ist so schwermetallarm, daß sowohl die gesetzlichen Bestimmungen für das Ableiten von Abwasser eingehalten werden als auch keine nennenswerten Verluste an wertvollen Schwermetallen toleriert werden müssen, was beides Vorteile der Erfindung sind. Der erhaltene Filterkuchen enthält die Schwermetalle so gut wie vollständig.

In Abweichung von der Patentschrift DE-43 09 825 wird dieser Filterkuchen aber nicht von seinen Schwermetallen befreit und es ist nicht vorgesehen, den Ruß in die Vergasung zurückzuführen.

Daher wird nach einem weiteren Merkmal der vorliegenden Erfindung der so erhaltene Filterkuchen, der die Schwermetalle nahezu vollständig enthält, entweder in einem Sprühtrockner, einem Stromtrockner mit Mahlwerk oder einem Mahltrockner mit erhitztem Inertgas auf eine Restfeuchte von < 10 % getrocknet.

Bei der erfindungsgemäßen Trocknung des Filterkuchens auf einen Wassergehalt von < 10 % muß beachtet werden, daß sich kein explosionsgefährliches Gemisch bildet. Die Trocknung erfolgt deshalb zweckmäßig unter inerter Atmosphäre. Es zeigte sich, daß bei Vergasungsanlagen, die mit sauerstoffangereicherter Luft oder Sauerstoff betrieben werden, genügend überschüssiger Stickstoff aus einer Luftzerlegungsanlage zur Verfügung steht, der nicht anderweitig verwendbar ist und deshalb vorteilhaft als Trocknungsmedium eingesetzt werden kann. Die Trocknung unter Verwendung dieses Stickstoffs in einmaligem Durchlauf erspart aufwendige und teure Kühl- und Kondensationsapparaturen sowie Umwälzeinrichtungen, wie sie bei Gasrezirkulationen erforderlich sind.

Die Trocknung selbst erfolgt vorzugsweise in Systemen, bei denen das für die nachfolgende Verbrennung notwendige, feine Kornspektrum bei der Trocknung unmittelbar erzeugt wird. Geeignet sind dazu z.B. Mahltrockner, Stromtrockner mit Mahlwerk und Sichter oder Sprühtrockner wobei das Trocknungsgas, z.B. der oben genannte Stickstoff, mit der Abwärme des Rauchgases aufgeheizt wird, die bei der anschließenden Rußverbrennung entsteht.

Daher wird nach einem weiteren Merkmal der vorliegenden Erfindung der so konditionierte, staubförmige Ruß in einem Staubbrenner bei einer Temperatur von 900 bis 1000°C und einem Sauerstoffgehalt von über 1 % unter Einhaltung einer Reaktionszeit von höchstens 3 Sekunden, vorzugsweise 1 Sekunde, verbrannt.

Um die Staubverbrennung in der nachstehend beschriebenen Weise durchführen zu können, darf der getrocknete Ruß einen Siebrückstand von höchstens 10 Gew.-% auf einem 90 µm-Sieb besitzen, Rußpartikel größer 140 µm dürfen nicht vorhanden sein. Das bedeutet, daß 90 Gew.-% des Rußes aus Partikeln kleiner als 90 µm sein muß. In den handelsüblichen Mahltrockner- und Stromtrocknersystemen kann dies nach dem Stand der Technik in einfacher Weise erreicht werden. Überraschend wurde auch gefunden, daß sich die erforderliche Kornfeinheit auch mit einem Sprühtrockner erreichen läßt. Dazu muß dem entwässerten Ruß eine so definierte Menge Wasser beigemengt werden, daß der bei ca. 20 Gew.-% Trockensubstanz nicht pumpbare Ruß gerade eben pumpfähig wird. Die beim Verdüsen auftretenden Scherkräfte sind ausreichend, um den Ruß in bestimmungsgemäße Kornfraktionen aufzuteilen. Die Wahl zwischen dem Einsatz eines Mahltrockners, eines Stromtrockners oder eines Sprühtrockners erfolgt nach den jeweiligen Standortbedingungen.

Die Verbrennung erfolgt in einem Staubbrenner oder einer Staubbrennkammer bei einer Verbrennungstemperatur zwischen 900 und 1000°C, einem Sauerstoffpartialdruck oberhalb von 0,01 bar und einer Verweilzeit von höchstens 3 Sekunden, vorzugsweise 1 Sekunde.

Die Verbrennung von Rußrückständen wird in der Patentliteratur in den Schriften EP-0 686 582, DE-40 03 242, EP-0 542 322 bereits ausführlich beschrieben.

In der Offenlegungsschrift EP-0 542 322 wird ebenfalls ein Verfahren behandelt, in dem vanadiumhaltiger Ruß verbrannt wird, um ein vanadiumhaltiges Feststoffgemisch zu gewinnen. Die Verbrennung muß aber entweder unterhalb von 700°C erfolgen oder der Sauerstoffpartialdruck muß unterhalb von 0,01 bar liegen; auf diese Weise wird vermieden, störende Mengen an Vanadiumpentoxid zu erzeugen. Die Verbrennung erfolgt in diesen Fällen nicht in einem Staubbrenner, sondern entweder in einem Etagenofen oder Drehrohrofen oder Wirbelschichtofen. Die Aufenthaltszeiten des Rußes sind dabei bauartbedingt erheblich größer als in einer Staubbrennkammer; dies hat den Nachteil wesentlich größerer Abmessungen und bedingt als Folge größeren Investitionsaufwand. Der geringere Sauerstoffpartialdruck führt außerdem zu einem unvollständigen Kohlenstoffumsatz, deswegen ist eine Rezirkulation der im Ofen entstandenen Asche erforderlich, was wegen des damit verbundenen Aufwands einen weiteren Nachteil darstellt. Weiterhin scheint die Zugabe von Zuschlagstoffen in den Ofen für eine sinnvolle Weiterverarbeitung erforderlich zu sein, was den Energieverbrauch steigert und einen weiteren Nachteil darstellt. Bei der erforderlichen Vortrocknung muß offensichtlich eine störende Staubbildung vermieden werden, was wegen der zu treffenden zusätzlichen Maßnahmen, zu denen sogar die Verwendung von zwei verschiedenen, hintereinandergeschalteten Öfen gehören kann und außerdem wegen der einzuhaltenden Beschränkungen bei der Wahl der Trocknungstemperatur einen weiteren Nachteil darstellt.

In der Offenlegungsschrift DE-40 03 242 wird ein Verfahren vorgestellt, das den schwermetallhaltigen Ruß aus einer Anlage zur Synthesegaserzeugung vor seiner Filtrierung mit Klärschlamm vermischt. Der Filterkuchen, der bei einer anschließenden Filtrierung entsteht, wird möglichst ohne Verwendung von Zusatzbrennstoff verbrannt; die Schrift nennt in einem der Beispiele die Verbrennung in der Wirbelschicht. Es bleibt jedoch unklar, wie bei einer gemeinsamen Verbrennung von vanadiumhaltigem Ruß und Klärschlamm die Entstehung von Vanadiumpentoxid verhindert werden kann, insbesondere unter Berücksichtigung des gesetzlich vorgeschriebenen Mindestsauerstoffgehaltes von 6 % bezogen auf trockenes Rauchgas und der bauartbedingt langen Verweilzeiten im Ofen. Damit besteht tendenziell die Gefahr von Verbackungen und Korrosion, die eventuell erst im Dauerbetrieb auftreten und bei den kleinen Versuchsmengen, wie sie in der Schrift angegeben sind, nicht beobachtbar sind. Das ist ein erheblicher Nachteil. Weiterhin soll die entstandene Asche auf einer "geordneten Deponie" abgelagert werden. Obwohl die geordnete Deponierung gegenüber ungeordneteren Entsorgungsmöglichkeiten stets vorzuziehen ist, stellt der Verzicht auf Gewinnung der im Ruß enthaltenen Schwermetalle gegenüber der vorliegenden Erfindung einen weiteren erheblichen Nachteil dar.

In der Offenlegungsschrift EP-0 686 598 wird ein Verfahren zur kombinierten Wirbelschichttrocknung mit anschließender Verbrennung beschrieben. Dabei soll vanadiumhaltiger Ruß aus einer Anlage zur partiellen Oxidation zwischen 600 und 1000°C "verbrannt" werden, die Unterdrückung der Vanadiumpentoxidbildung erfolgt durch Absenkung des Sauerstoffpartialdrucks auf 10⁻⁷ bis 10⁻⁸ bar, womit praktisch die Verhältnisse einer partiellen Oxidation vorliegen. Dies wird auch dadurch belegt, daß die aus diesem Prozeß hervorgehende vanadiumhaltige Asche noch 2 bis 5 % Kohlenstoff enthalten soll. Der Verbrennungsprozeß selbst ist auf Ruß beschränkt, der mindestens 60 % Kohlenstoff enthält. Die Schrift beschreibt, wie nach dem Verbrennen aus dem 850°C heißen Gas Dampf erzeugt wird. Dabei wird angegeben, daß die Wandtemperatur des Boilers unter 300°C gewählt wurde, um Anbackungen zu verhindern. Auch die Wandungen der Brennkammer wurden auf unter 300°C gekühlt, indem ein Luftschleier zwischen dem eigentlichen Brennraum und die Brennkammerwand gelegt wurde. Von Nachteil ist, daß dies offensichtlich im Widerspruch zu der Angabe steht, daß die Bildung von Vanadiumpentoxid wirksam unterdrückt werde, wenn man davon ausgeht, daß die in der Literatur beschriebene Verbackungsgefahr im wesentlichen aus der Vanadiumpentoxidbildung folgt. Wenn wirklich kein Vanadiumpentoxid gebildet wird, ist der beschriebene Aufwand in dieser Weise nicht erforderlich. An anderer Stelle der Schrift wird eine Angabe zu den gasförmigen Emissionen getroffen. Hierin wird der Sauerstoffgehalt mit 13,89 % angegeben, das ist unter atmosphärischen Bedingungen ein Sauerstoffpartialdruck von 0,14 bar und somit um mehrere Zehnerpotenzen verschieden von dem zuvor angegebenen Sauerstoffpartialdruck von 10⁻⁷ bis 10⁻⁸ bar. Dies bedeutet, daß der eigentliche Verbrennungsprozeß durch Zugabe erheblicher Mengen zusätzlicher Luft überlagert wird. Das würde dann auch die Furcht vor Verbackung wegen Vanadiumpentoxidbildung erklären. Paradoxerweise führt also gerade die Luft, die in der Brennkammer die Wand vor Verbackungen schützen soll, erst zu der Verbackungsgefahr, die sie eigentlich verhindern soll. Diese Verbackungsgefahr schränkt in der Folge auch die Möglichkeiten der Abhitzenutzung ein, was ein schwerwiegender Nachteil des beschriebenen Verfahrens ist.

In der vorliegenden Erfindung wird zur Verbrennung des Rußes eine Brennkammer in der Art der Patentschrift DE-41 14 171-C2 eingesetzt, die der in der Offenlegungsschrift EP-0 686 598 zwar sehr ähnlich ist, aber anders betrieben wird. In dieser Patentschrift DE-41 14 171-C2 wird eine Brennkammer beschrieben, in der Ruß oder andere brennbare Stoffe auf einer spiraligen, tangentialen Bahn geführt werden, wobei aufgrund der dabei vorherrschenden, turbulenten Strömungsverhältnisse eine besonders gute Verwirbelung und Vermischung gewährleistet ist. Abweichend von der vorliegenden Erfindung wird in der Patentschrift DE-41 14 171-C2 aber eine Verbrennung in einem Temperaturbereich zwischen 1200 und 1300°C mitgeteilt, auch die angestrebte Verbrennungszeit beträgt in Abweichung von der vorliegenden Erfindung mindestens 2 s, da jene Patentschrift auf die Verbrennung von schwerverbrennbaren Stoffen abzielt.

Überraschend ist, daß sich Ruß überhaupt während einer so kurzen Reaktionsdauer verbrennen läßt, was in krassem Gegensatz zu der allgemein bekannten Reaktionsträgheit von Ruß steht. Normalerweise ist Ruß, welcher im Gegensatz zu Kohle kaum flüchtige Bestandteile enthält, nur sehr schwer zu entzünden und zu verbrennen. In Versuchen wurde ermittelt, daß die Reaktionskonstante bei der kontrollierten Verbrennung von Ruß aus der ölvergasung einige Zehnerpotenzen höher ist als die für industriell hergestellten Ruß (Gasruß). Offensichtlich findet durch den hohen Schwermetallanteil eine Aktivierung statt, möglicherweise katalytischer Art. Dazu kommt, daß die Rußteilchen kleiner als 140 µm sind und daher eine große Oberfläche in bezug auf ihr Gewicht besitzen. Die große Reaktionsgeschwindigkeit führt überraschenderweise dazu, daß die für eine Betriebsweise in dem angegebenen Temperaturbereich und Sauerstoffpartialdruck in der Patentliteratur beschriebenen Probleme mit Anbackungen nicht auftreten. Das beruht darauf, daß die kurze Zeit nicht zur Bildung von Vanadiumpentoxid ausreicht, welches als Hauptverursacher für die Anbackungen gilt. In der ersten Phase des Verbrennungsvorgangs brennen die Rußpartikel unter Bildung von Kohlenmonoxid ab. Das Kohlenmonoxid verhindert eine weitergehende Oxidation, bis die Rußpartikel abgebrannt sind. Aus diesem Grund entstehen solange auch Vanadiumverbindungen niedrigerer Oxidationsstufen als Vanadiumpentoxid. Diese Vanadiumverbindungen haben wesentlich höhere Schmelzpunkte als Vanadiumpentoxid und führen deshalb bei den in der Verbrennung vorliegenden Temperaturen nicht zu Anbackungen. Sobald die Rußpartikel abgebrannt sind, entsteht die Gefahr der Bildung von Vanadiumpentoxid. Daher muß die Weiterreaktion an dieser Stelle unterbunden werden.

Daher wird, wie weiter oben schon ausgeführt, das in der Verbrennung gebildete Rauchgas sofort im Anschluß an die Verbrennung durch Zugabe von Luft oder Inertgas oder Wasser oder entstaubtem, abgekühlten Rauchgas auf 450 bis 650°C, vorzugsweise 600°C, abgekühlt.

Das kann dadurch geschehen, daß in die Brennkammer kälteres Gas oder verdüste Flüssigkeit durch seitliche Öffnungen zugegeben wird, die sich aufgrund der bauartbedingt guten Verteilung sehr schnell mit dem heißen Abgas mischt. Als Gas kann kalte Luft, kaltes Inertgas oder kaltes, gereinigtes Rauchgas verwendet werden. Die Zugabe des kalten Gases oder der Flüssigkeit ist auch unmittelbar nach der Brennkammer möglich, wenn eine so gute Vermischung gewährleistet wird, daß eine quasi schlagartige Abkühlung stattfindet. Die Temperatur soll durch diese Zugabe gleich nach dem Verbrennungsprozeß auf 450°C bis 650°C, vorzugsweise auf 600°C, eingestellt werden. Im Anschluß daran wird die im Rauchgas enthaltene Wärme zur Aufheizung des Trocknungsgases genutzt.

Damit wird ein weiteres Merkmal der vorliegenden Erfindung vorgesehen, bei der die bei der Verbrennung freigesetzte Wärme für die Aufheizung des im Trocknungsprozeß verwendeten Inertgases eingesetzt wird. Dadurch wird die im Ruß vorhandene, chemische Energie in vorteilhafter Weise, nämlich zwecks Einsparung von Primärenergie, genutzt.

Durch diese Maßnahmen wird die Verbrennungsreaktion praktisch eingefroren und eine Aufoxidation der Vanadiumverbindungen zu Vanadiumpentoxid unterbleibt, außerdem wird erreicht, daß die Brennkammer kompakt gebaut und entsprechend preisgünstiger gefertigt werden kann, was ein weiterer Vorteil der Erfindung ist.

In einer weiteren Ausgestaltung der vorliegenden Erfindung ist vorgesehen, daß die nach der Verbrennung des Rußes und Entstaubung des Rauchgases zurückbleibende Asche als metallurgischer Rohstoff der Gewinnung von Vanadium und anderer, im Öl enthaltener Schwermetalle zugeführt wird, wobei die Asche das Vanadium überwiegend in solchen Verbindungen enthält, deren Oxidationsstufen unter der von Vanadiumpentoxid liegen.

Die Asche, die bei der Verbrennung des Rußes entsteht, wird nach der Abhitzenutzung von einem Filter aus dem Abgas abgeschieden und trocken abgezogen. Sie enthält die Schwermetalle in konzentrierter Form, wobei der überwiegende Teil des Vanadiums als Vanadiumdioxid vorliegt. Der Kohlenstoffanteil der Asche ist äußerst gering, da durch die beschriebene Reaktionsführung eine nahezu vollständige Verbrennung erreicht wird. Die Asche läßt sich direkt metallurgisch verwerten.

Das entstaubte Rauchgas wird zur Abscheidung der übrigen Schadstoffe in eine geeignete Anlage zur weiteren Reinigung geführt.

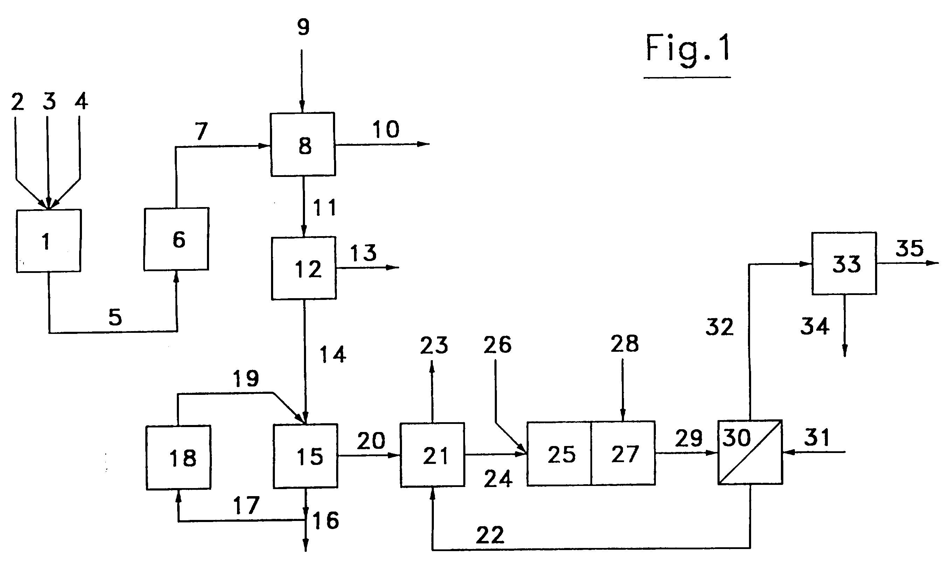

Fig. 1 zeigt ein Verfahrensfließbild, worin das erfindungsgemäße Verfahren beispielhaft beschrieben wird.

Das schwermetallhaltige Öl wird in einer Ölvergasung mittels partieller Oxidation umgesetzt. Dazu wird mit einem Dreistrombrenner schwermetallhaltiges Öl 3 in den Ölvergaser 1 eingedüst und von den beiden Sauerstoffströmen 2 und 4 zu einem feinen Ölnebel zerstäubt. Unter hohem Druck bis etwa 90 bar sowie einer Temperatur von ca. 1400°C findet eine partielle Oxidation statt, in der das schwermetallhaltige Öl 3 zu über 99 % zu Synthesegas und zu weniger als 1 % zu Ruß umgesetzt wird, an den sich die Schwermetallverbindungen anlagern. Das gebildete rohe Synthesegas 5 wird in einen Rohgaskühler mit Abhitzenutzung 6 geleitet, der es auf 300 bis 400°C abkühlt. Das abgekühlte Rohgas 7 wird danach in einen Wasserquench 8 geleitet, wo mit Wasser 9 der Ruß zusammen mit anderen löslichen Stoffen ausgewaschen wird. Das vorgereinigte Synthesegas 10 wird zur weiteren Verwendung abgegeben. Das heiße Rußwasser 11 wird in einem Rußwasser-Flash 12 auf Atmosphärendruck entspannt und abgekühlt. Dabei entweicht das Flashgas 13, das die bei geringerem Druck in Wasser schlechter löslichen Gase enthält. Das kalte Rußwasser 14 wird in eine Filterpresse 15 geleitet und filtriert. Das zuerst erhaltene, schwermetallhaltige Filtrat 17 wird abgezweigt und in einem Filtrat zwischenbehälter 18 zwischengelagert. Sobald die Schwermetallkonzentration des Filtratstroms aus der Filterpresse 15 unter einen Wert gesunken ist, der eine Entsorgung als Abwasser erlaubt, wird das saubere Filtrat 16 abgeleitet. Das zwischengelagerte Filtrat 19 wird nach und nach in die Filterpresse 15 zurückgeführt und nochmals filtriert. Dabei werden die Schwermetalle von dem bereits gebildeten Filterkuchen aufgenommen. Nach dem Ende des Filtrationsvorgangs wird der Filterkuchen 20 in den Trockner 21 gegeben und mit heißem Inertgas 22 getrocknet. In dem Trockner 21 findet außerdem die Zerkleinerung der Rußpartikel auf Korngrößen unter 140 µm statt. Er enthält außerdem einen Rußfilter, der verhindert, daß das feuchte Inertgas 23 beim Verlassen des Trockners 21 Rußpartikel mitreißt. Das feuchte Inertgas 23 kann an die Atmosphäre abgeleitet werden, da es kaum Verunreinigungen enthält. Der getrocknete Ruß wird als Rußstaub 24 pneumatisch in den Rußbrenner 25 gefördert, wo er mit Brennerluft 26 in sehr kurzer Zeit bei 900 bis 1000°C vollständig verbrannt wird. Unmittelbar an diesen Verbrennungsvorgang durchläuft das heiße Rauchgas eine Zone, in der es schlagartig auf unter 650°C abgekühlt wird. Diese Abkühlung erfolgt in einer Mischkammer 27, in der Kaltgas 28 mit dem Rauchgas des Rußbrenners 25 intensiv vermischt wird. Die Mischkammer 27 und der Rußbrenner 25 können in einer baulichen Einheit als Brennkammer ausgeführt werden.

Das zwischen 650 und 450°C heiße Rauchgas 29 gibt seine Wärmeenergie im Rauchgas-Inertgas-Wärmetauscher 30 an das kalte Inertgas 31 ab. Das kalte Rauchgas 32 wird im Gasfilter 33 von der Schwermetallasche 34 befreit und als entstaubtes Rauchgas 35 zur weiteren Reinigung in eine geeignete Anlage abgeleitet. Die Schwermetallasche 34 enthält keinen nennenswerten Anteil an Ruß und wird daher als metallurgischer Rohstoff verwertet.

## Patentansprüche

1. Verfahren zur Erzeugung eines metallurgischen Rohstoffs aus schwermetallhaltigem öl, das einer partiellen Oxidation zugeführt wird,
gekennzeichnet durch folgende Merkmale:
a) der schwermetallhaltige Ruß wird abgetrennt und verbrannt, wobei die Schwermetalle dabei als Asche anfallen,
b) der bei der partiellen Oxidation entstehende Ruß, der die Schwermetalle in angelagerten chemischen Verbindungen enthält, wird mittels einer wäßrigen Waschlösung aus dem entstandenen Synthesegas ausgewaschen,
c) die Waschlösung wird in einer Kammerfilterpresse in der Weise filtriert, daß das zuerst erhaltene Filtrat aufgefangen und nochmals filtriert wird,
d) der so erhaltene Filterkuchen, der die Schwermetalle nahezu vollständig enthält, wird entweder in einem Sprühtrockner, einem Stromtrockner mit Mahlwerk oder einem Mahltrockner mit erhitztem Inertgas auf eine Restfeuchte von < 10 % getrocknet,
e) der so konditionierte, staubförmige Ruß wird mit einer maximalen Korngröße der Rußpartikel von ≤ 140 µm in einem Staubbrenner bei einer Temperatur von 900 bis 1000°C und einem Sauerstoffgehalt von über 1 % unter Einhaltung einer Reaktionszeit von höchstens 3 Sekunden, vorzugsweise 1 Sekunde, verbrannt,
f) das gebildete Rauchgas wird sofort im Anschluß an die Verbrennung durch Zugabe von Luft oder Inertgas oder Wasser oder entstaubtem, abgekühlten Rauchgas auf 450 bis 650°C, vorzugsweise 600°C, abgekühlt,
g) die bei der Verbrennung freigesetzte Wärme wird für die Aufheizung des im Trocknungsprozeß verwendeten Inertgases eingesetzt.

2. Verfahren nach Anspruch 1,
dadurch gekennzeichnet,
daß die nach der Verbrennung des Rußes und Entstaubung des Rauchgases zurückbleibende Asche als metallurgischer Rohstoff der Gewinnung von Vanadium und anderer, im Öl enthaltener Schwermetalle zugeführt wird, wobei die Asche das Vanadium überwiegend in solchen Verbindungen enthält, deren Oxidationsstufen unter der von Vanadiumpentoxid liegen.

## Claims

1. A process for producing a metallurgical raw material from heavy metal-bearing oil which is fed to a partial oxidation step, characterised by the following features:
a) the heavy metal-bearing carbon black is separated off and burnt, with the heavy metals occurring as ash in that operation,
b) the carbon black which is produced in the partial oxidation step and which contains the heavy metals in added chemical compounds is washed out of the synthesis gas produced by means of an aqueous washing solution,
c) the washing solution is filtered in a chamber filter press in such a way that the filtrate first obtained is captured and filtered once again,
d) the filter cake which is obtained in that way and which almost completely contains the heavy metals is dried either in a spray drier, a flow drier with grinding mill or a grinding drier with heated inert gas to a residual moisture content of < 10%,
e) the carbon black in dust form which is processed in that way is burnt with a maximum grain size of the carbon black particles of ≤ 140 µm in a dust burner at a temperature of 900 to 1000°C and with an oxygen content of over 1% while maintaining a reaction time of at most 3 seconds, preferably 1 second,
f) the flue gas formed is cooled to 450 to 650°C, preferably 600°C, immediately following the burning step by the addition of air or inert gas or water or cooled flue gas from which dust has been removed, and
g) the heat liberated in the burning step is used for heating the inert gas used in the drying process.

2. A process according to claim 1 characterised in that the ash remaining after burning of the carbon black and removal of the dust from the flue gas is fed as a metallurgical raw material to the production of vanadium and other heavy metals contained in the oil, wherein the ash contains the vanadium predominantly in such compounds whose oxidation numbers are below that of vanadium pentoxide.

## Revendications

1. Procédé pour produire une matière première métallurgique à partir d'huile contenant des métaux lourds, que l'on soumet à une oxydation partielle,
caractérisé par les caractéristiques suivantes :
a) les suies contenant des métaux lourds sont séparées et brûlées, les métaux lourds se présentant alors sous forme de cendres,
b) les suies qui se produisent lors de l'oxydation partielle, et qui contiennent les métaux lourds sous forme de composés chimiques déposés, sont lavées au moyen d'une solution de lavage aqueuse à partir du gaz de synthèse qui se produit,
c) la solution de lavage est filtrée dans une presse de filtrage à chambres de telle manière que le filtrat obtenu en premier lieu est capté et à nouveau filtré,
d) le gâteau de filtrage ainsi obtenu, qui contient pratiquement totalement les métaux lourds, est séché, soit dans un séchoir à pulvérisation, soit dans un séchoir à courant avec broyeur, soit encore dans un séchoir broyeur avec gaz inerte réchauffé, jusqu'à une humidité résiduelle inférieure à 10%,
e) les suies ainsi conditionnées et sous forme de poussières sont brûlées, avec une taille de particules maximum ≤ 140 microns dans un brûleur à poussières à une température de 900 à 1.000°C et une teneur en oxygène supérieure à 1%, en observant une durée de réaction maximum de 3 s, de préférence 1 s,
f) les gaz de fumée ainsi formés sont refroidis immédiatement à la suite de la combustion par addition d'air ou de gaz inerte ou d'eau ou encore de gaz de fumée dépoussiérés refroidis jusqu'à 450 à 650°C, de préférence 600 °C, et
g) la chaleur dégagée lors de la combustion est employée pour réchauffer le gaz inerte utilisé dans le processus de séchage.

2. Procédé selon la revendication 1, caractérisé en ce que
les cendres qui restent après combustion de la suie et dépoussiérage des gaz de fumée sont amenées à titre de matière première métallurgique pour la récupération de vanadium, et d'autres métaux lourds contenus dans l'huile, et en ce que les cendres contiennent le vanadium principalement dans des composés dont les degrés d'oxydation sont situés au-dessous de celui du pentaoxyde de vanadium.
